Europäisches Patentamt

European Patent Office

Office européen des brevets

(19)

(11) Numéro de publication: **0 145 630**
**B1**

(12) **FASCICULE DE BREVET EUROPEEN**

(45) Date de publication du fascicule du brevet: **18.01.89**

(51) Int. Cl.⁴: **B 65 G 47/90, A 41 H 43/02**

(21) Numéro de dépôt: **84440057.2**

(22) Date de dépôt: **23.11.84**

(54) **Dispositif de préhension unitaire d'articles disposés en vrac.**

(30) Priorité: **29.11.83 FR 8319256**

(43) Date de publication de la demande:
**19.06.85 Bulletin 85/25**

(45) Mention de la délivrance du brevet:
**18.01.89 Bulletin 89/03**

(84) Etats contractants désignés:
**AT BE CH DE FR GB IT LI LU NL SE**

(56) Documents cités:
**DE-A-2 749 908**
**GB-A-1 369 319**
**US-A-3 253 824**
**US-A-3 688 421**

(73) Titulaire: **REDOUTE CATALOGUE Société Anonyme:**
**57 rue Blanchemaille**
**F-59100 Roubaix (Nord) (FR)**

(72) Inventeur: **Barillec, Christian**
**325 Boulevard Gambetta**
**Tourcong N. (FR)**
Inventeur: **Bonneton, Marc**
**325 Boulevard Gambetta**
**Tourcong N. (FR)**
Inventeur: **Janvier, Dominique**
**31 Avenue de la Roseraie**
**Lille N. (FR)**

(74) Mandataire: **Lepage, Jean-Pierre**
**Cabinet Lepage & Aubertin Innovations et Prestations 23/25, rue Nicolas Leblanc B.P. 1069**
**F-59011 Lille Cédex 1 (Nord) (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

**Description**

L'invention est relative à un dispositif de préhension unitaire d'articles disposés en vrac, Elle trouvera notamment son application dans l'industrie de la vente par correspondance.

Dans les Sociétés de négoce, en particulier s'il s'agit de ventes par correspondance, on est amené à manipuler dans les magasins de stockage des objets de formes très diverses.

Jusqu'à présent, les tentatives d'automatisation de magasins de stockage se sont limitées à la réalisation de chariots de levage à même de manipuler des caisses standard ou des palettes.

La manipulation d'articles unitaires est extrêmement délicate lorsque ceux-ci peuvent se présenter sous des aspects multiples.

En particulier, les articles ne présentant pas de formes bien définies telles que des textiles par exemple sont extrêmement délicats à appréhender. Des essais ont été réalisés en utilisant des bras manipulateurs guidés à distance par des opérateurs qui pouvaient apprécier le fonctionnement du bras à l'aide d'un réseau en circuit fermé de télévision. Malheureusement, ces essais se sont vite révélés infructueux étant donné que l'utilisation de caméras de télévision ne procurait à l'opérateur aucune notion de perspective et donc l'opérateur n'était pas à même d'apprécier les distances.

Par ailleurs, dans le domaine de la confection, il est courant d'avoir des pièces textiles empilées et on utilise des dispositifs dépileurs pour reprendre une à une les pièces en vue de les travailler ultérieurement.

Un tel dispositif est notamment illustré dans le document US—A—3 253 824 qui décrit un dispositif pour séparer des pièces en tissu disposées en piles.

Dans l'un des modes de réalisation de ce document américain, le dispositif comporte des moyens de manoeuvre pressant le dessus de la pile et des moyens de préhension prélevant une pièce sur la pile.

Les dits moyens de préhension sont portés par un bras de manipulation mobile dont les déplacements verticaux sont contrôlés et aptes à déposer un ensemble de roulettes sur la partie supérieure de la pile.

En effet, les moyens de préhension sont substantiellement constitués par deux cylindres comportant sur une partie de leur périphérie une denture d'engrenage et le reste de la périphérie présentant une surface rugueuse. Ces cylindres sont animés en rotation par un solénoïde et une crémaillère aptes à faire tourner les dits cylindres pour provoquer le pincement du tissu entre eux.

Un tel dispositif donne certainement satisfaction dans le cas du désempilement de pièces textiles en piles mais n'est pas du tout adapté à la préhension d'articles unitaires, mous de par leur nature, disposés en vrac dans un bac. Au contraire, il est prévu pour prélever des articles identiques positionnés toujours au même endroit.

Le but principal de la présente invention est de proposer un dispositif de préhension unitaire d'articles disposés en vrac dans un bac qui puisse fonctionner entièrement automatiquement et travailler en aveugle sans aucune intervention manuelle d'un opérateur, mais qui présente de bonnes garanties de prise d'un seul article à la fois.

En effet, pour être intégré dans des systèmes automatiques, le dispositif de préhension de la présente invention doit être sûr et fiable car l'absence de contrôle manuel nécessite un double résultat certain: d'une part que l'article choisi a bien été saisi par le dispositif de préhension et d'autre part qu'un seul article a été prélevé du bac.

Un autre but de la présente invention est de présenter un dispositif de préhension qui accepte des articles quelle qu'en soit la forme en particulier des articles qui, de par leur nature, sont mous tels que des textiles ou par exemple des objets rigides emballés sous un film plastifié à même de se déformer.

Un autre but de la présente invention est d'être adapté à des articles disposés en vrac. Il est en effet indispensable de pouvoir manipuler des objets qui n'ont pas nécessairement été préalablement rangés selon un ordre bien établi, ce qui entraînerait indirectement l'utilisation de main d'oeuvre ou l'emploi de machines particulières.

D'autres buts et avantages de la présente invention apparaîtront au cours de la description qui va suivre qui n'est cependant donnée qu'à titre indicatif.

Selon la présente invention, le dispositif de préhension unitaire d'articles disposés en vrac dans un bac, les dits articles étant, par leur nature, mous tels que des textiles, ou enveloppés dans un emballage souple, tel qu'un sachet en film plastifié comportant:

— un bras de manipulation mobile dont les déplacements verticaux sont contrôlés,

— un ensemble de roulettes et de préhension porté par le dit bras comportant des moyens d'entraînement contrôlés autorisant la rotation des roulettes afin que celles-ci puissent pincer l'article directement ou son emballage, est caractérisé par le fait qu'il comporte:

— une cloche rétractable entourant l'ensemble de roulettes pour faciliter la préhension des articles dans le dit bac,

— un dispositif d'aspiration permettant de créer une dépression contrôlée dans le volume intérieur de la dite cloche, les dits articles étant guidés puis happés par la cloche.

L'invention sera mieux comprise à la lecture de la description suivante accompagnée de dessins en annexe parmi lesquels:

— la figure 1 schématise une vue d'ensemble du dispositif de préhension selon un mode de réalisation de la présente invention,

— les figures 2a, b et c illustrent les différentes phases du fonctionnement du dispositif représenté à la figure 1,

— la figure 3 schématise un mode préférentiel de réalisation des roulettes du dispositif de préhension de la présente invention,

— la figure 4 schématise une vue d'ensemble du dispositif de préhension réalisé selon un autre mode préférentiel de la présente invention,

— les figures 5a, b et c illustrent les différentes phases du fonctionnement du dispositif représenté à la figure 4.

— la figure 6 schématise un mode préférentiel de disposition des roulettes de préhension du dispositif de la présente invention,

— la figure 7 montre un détail du bras de préhension, réalisé selon un autre mode préférentiel du dispositif de la présente invention.

Le dispositif de préhension unitaire de la présente invention est tout particulièrement adapté à l'industrie de la vente par correspondance. En effet, dans cette industrie, il est nécessaire de prélever dans différents bacs les articles qui peuvent être de natures très diverses, commandés par un client pour ensuite les regrouper, les reconditionner et les réexpédier à l'adresse du client.

La présente invention concerne un dispositif de préhension qui soit particulièrement adapté pour l'automatisation de son fonctionnement. En particulier, le dispositif de la présente invention peut fonctionner sans aucune intervention manuelle ou visuelle extérieure.

Le dispositif de préhension unitaire de la présente invention vise plus particulièrement la prise d'objets disposés en vrac dans des bacs. De la sorte, aucun rangement préalable des articles n'est nécessaire en outre le dispositif de préhension de la présente invention assure la prise d'un seul article à la fois. Il s'agit certainement de la condition la plus délicate à remplir. En effet, de nombreux dispositifs manipulateurs tels que des pinces ou autres permettent à l'heure actuelle de prélever des articles de formes quelconques, toutefois, en général, il n'y a aucune garantie de prise d'un article à la fois et en outre que l'article choisi a réellement été pris par le bras manipulateur.

Le dispositif de la présente invention est adapté plus spécialement aux articles qui, de par leur nature sont mous tels que des textiles ou des articles enveloppés dans un emballage souple tel qu'un sachet en film plastifié. De la sorte, le dispositif de la présente invention pourra s'adapter à n'importe quel article puisque si l'article n'était pas de par sa nature mou, il suffit de le conditionner sous un emballage souple pour le rendre manipulable par le dispositif de l'invention.

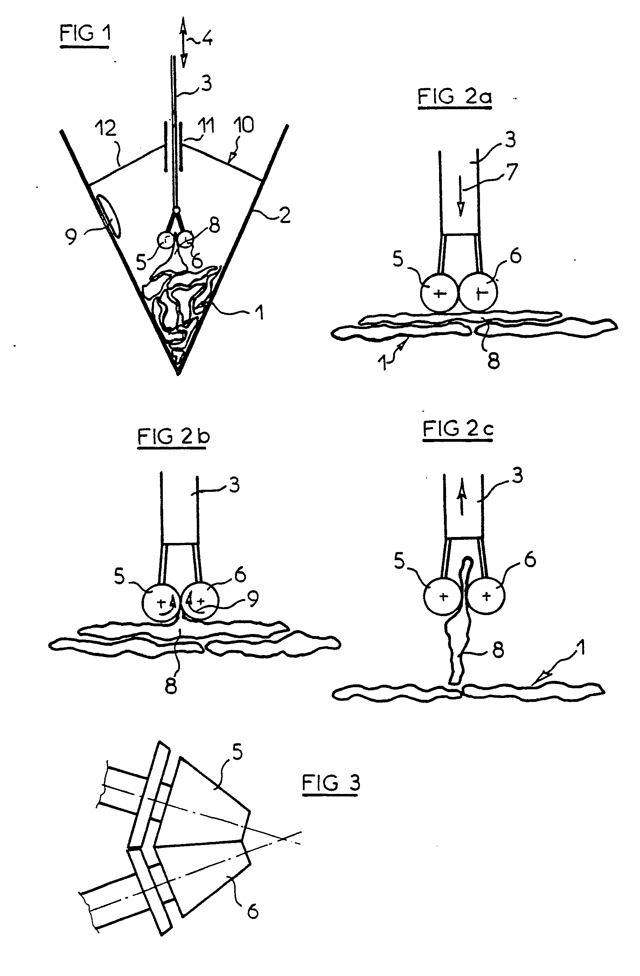

La figure 1 illustre les différents organes composant un dispositif de préhension dans un premier mode de réalisation préférentiel.

Initialement, les articles 1 sont regroupés dans un bac 2. Les articles sont disposés en vrac et répondent aux critères de déformabilité exigés, soit en raison de leur nature, soit grâce à l'emballage dans lesquels ils sont conditionnés.

Le dispositif comprend un bras de manipulation 3. Ce bras 3 est mobile c'est-à-dire qu'il est susceptible de circuler par exemple dans le magasin de stockage des bacs 2 pour venir appréhender l'article choisi, de plus, le bras 3 est susceptible de plonger dans le bac 2 pour y prélever un article.

Il est essentiel que le bras 3 puisse être animé d'un mouvement vertical symbolisé par la flèche 4 de la figure 1, en ce qui concerne les autres déplacements susceptibles d'être effectués par le bras 3, ceux-ci dépendent en grande partie de l'installation qui est organisée autour du dispositif de préhension. Celui-ci vise plus particulièrement la prise d'un seul article à la fois disposé dans un bac en vrac; une fois cette prise réalisée des moyens, à la portée de l'Homme de l'Art, peuvent être mis en jeu pour acheminer l'article prélevé vers un endroit précis, sans que ce déplacement soit nécessairement effectué par le bras 3.

Il est à remarquer que les mouvements verticaux du bras de manipulation 3 sont contrôlés, notamment lorsque le bras descend et entre en contact avec les articles 1 disposés en vrac dans le bac 2, le mouvement de descente doit être arrêté. Cet arrêt est provoqué par exemple par un capteur d'effort, constitué par un pied de palpage positionné parallèlement au bras 3 qui lorsqu'il vient appuyer sur les articles 1 disposés dans le bac 2 transmet cet effort sur un contact électrique arrêtant la descente du bras 3.

Le dispositif comprend en outre un ensemble de deux roulettes 5 et 6 dont les génératrices sont appliquées l'une contre l'autre. Un organe moteur, non illustré à la figure 1, assure l'entraînement en rotation des roulettes 5 et 6, lorsqu'il est commandé.

Les figures 2a à c illustrent les différentes phases de la préhension unitaire.

Le bras 3 est initialement animé d'un mouvement descendant schématisé par la flèche 7 de la figure 2a. Le bras 3 initialement est disposé au-dessus du bac 2, de sorte que la descente du bras 3 se traduit par une mise en contact des roulettes 5 et 6 avec les articles 1 disposés en vrac dans le bac, en particulier les roulettes 5 et 6 viennent se poser sur l'article 8 disposé à la partie supérieure du tas d'articles 1 placés dans le bac.

Une fois cette phase d'approche terminée, l'organe moteur est actionné ce qui provoque une mise en rotation des roulettes 5 et 6 schématisées par les flèches 9 selon les sens de rotation contraires de telle sorte à pincer l'article 8 entre les roulettes 5 et 6. Il est donc indispensable que l'article 8 soit susceptible de se déformer sans conséquence, ce qui peut être réalisé soit en agissant sur des articles qui de par leur nature sont mous, ou des articles de forme quelconque enveloppés dans un emballage souple. De par la déformabilité de l'article 8, celui-ci sera happé entre les roulettes 5 et 6. Pour faciliter cette opération, on pourra avantageusement garnir la périphérie des roulettes 5 et 6 avec un matériau à coefficient de frottement élevé tel que du caoutchouc.

Les roulettes 5 et 6 doivent pouvoir s'écarter l'une de l'autre pour permettre l'introduction de l'article 8 entre elles. La force de pression exercée mutuellement pour chacune des roulettes 5 et 6, sera ajustée de façon à être adaptée aux articles à prélever. Pour des articles lourds, il est souhaitable bien sûr de disposer d'une pression élevée entre les roulettes par contre s'il s'agit d'articles épais, tels que des pulls ou des manteaux, il est souhaitable que la force soit plus limitée et également que les roulettes 5 et 6 puissent s'écarter l'une de l'autre sans dommage pour permettre l'introduction d'un produit épais entre elles.

Aussitôt que l'article 8 aura été happé entre les roulettes 5 et 6 comme cela est illustré à la figure 2c, le bras de manipulation 3 peut être relevé ce qui correspond à la prise unitaire d'un article 8 dans l'ensemble des produits en vrac 1.

Le dispositif de préhension de la présente invention comporte des moyens de détection contrôlant la présence d'un article 8 entre les roulettes 5 et 6 autorisant l'arrêt de la rotation des dites roulettes. Ces moyens de détection peuvent être constitués par divers dispositifs existants tels que détecteurs optiques, détecteurs de déplacement, détecteurs de conductivité.

En particulier, il est possible d'utiliser un système optique placé entre les roulettes 5 et 6 qui permet de détecter la présence d'un corps entre les roulettes. Par ailleurs, on pourrait utiliser un détecteur de déplacement contrôlant l'écartement des roulettes et de ce fait pouvant détecter si un objet a été introduit entre elles.

Selon un mode préférentiel de la présente invention, on peut également détecter la présence d'un article entre les roulettes en réalisant les roulettes dans des matériaux conducteurs de l'électricité, tels que du caoutchouc conducteur ou de la résine chargée de particules métalliques, et en contrôlant la conductivité entre les dites roulettes. On fait parcourir les roulettes par un courant électrique et, de ce fait, toute introduction d'un objet entre elles modifie leur conductivité et signale sa présence.

Comme indiqué précédemment, il est essentiel de ne prélever qu'un seul article à la fois et pour ce faire, il est nécessaire d'utiliser un dispositif qui présente une très faible surface de préhension, celle-ci pouvant être définie comme la surface située entre les axes de rotation des roulettes 5 et 6, limitée à la largeur des roulettes.

Des essais ont été menés et l'utilisation de roulettes dont le diamètre est compris entre 5 et 15 mm se sont avérés satisfaisants. Par ailleurs, la largeur des roulettes peut être de l'ordre de quelques millimètres et par exemple 5 mm.

Il faut noter que la minimisation du diamètre des roulettes est favorable à la précision de la préhension en particulier les risques de prélever deux ou plusieurs articles sont très faibles. Par contre, un faible diamètre réduit la rigidité du dispositif.

Aussi, selon un des modes de réalisation de la présente invention, on utilise des roulettes coniques 5 et 6 telles que représentées à la figure 3.

Le faible diamètre de l'ordre de 3 mm favorise l'entraînement et l'amorce du pincement du produit, en raison principalement de la faible distance séparant d'une part les points de contact initiaux entre les roulettes et le produit à prendre, et d'autre part la zone de contact entre les deux roulettes qui assurent le pincement.

Le diamètre plus important de 8 à 10 mm assure au système une bonne rigidité et une bonne résistance mécanique et permet une prise solide du produit.

Ainsi, des roulettes coniques 5 et 6 permettent de bénéficier des avantages liés au petit et au grand diamètres de roulettes.

Dans les exemples choisis, les axes de rotation des roulettes ont été représentés sensiblement horizontaux, toutefois, on pourra également envisager de les incliner ce qui aura pour effet de diminuer la surface de préhension et par conséquent de diminuer également les risques de double prise.

Etant donné que l'on souhaite utiliser le dispositif de préhension de la présente invention sans assistance visuelle extérieure, il est nécessaire que lorsque le bras de manipulation 3 plonge dans le bac 2, les roulettes 5 et 6 rencontrent les articles 1 disposés dans le bac. Pour ce on adoptera avantageusement un bac de forme évasée présentant notamment une forme pyramidale ou conique dont le sommet est dirigé vers le bas.

Il est également souhaitable que les articles conditionnés dans le bac 2 ne puissent rester posés sur le flanc du bac 2 tel que l'article 9 schématisé à la figure 1 notamment en raison du manque de déclivité des parois du bac 2. Aussi, on équipe avantageusement le dispositif de préhension de la présente invention d'un poussoir 10 qui repousse les articles susceptibles d'être présents sur les parois du bac 2 vers le fond du dit bac 2.

Un exemple de réalisation du poussoir 10 est donné à la figure 1 dans laquelle ce poussoir 10 est constitué d'une bague coulissante 11 autour du bras de manipulation 3, la dite bague 11 étant garnie d'arêtes 12 sur sa périphérie.

Les arêtes 12 seront de préférence souples au moins au niveau de leurs extrémités de façon à pouvoir balayer la surface intérieure des parois du bac 2 et ainsi repousser les articles 9 qui reposent sur la dite paroi.

Ce poussoir 10 évite le phénomène de voûtes bien connues des utilisateurs de trémies.

Il faut noter que la préhension pourra être facilitée par la mise en place d'un système d'aspiration disposé au-dessus des roulettes qui attirera l'objet à prélever entre les roulettes. Le système d'aspiration fonctionne lors de la prise conjointement avec la rotation des roulettes puis est coupé lorsque l'objet est engagé entre les roulettes.

On pourra également envisager d'utiliser deux ou plusieurs courroies disposées entre des poulies de renvoi de sorte qu'une courroie présente un brin placé côte à côte avec un brin de la courroie voisine. De la sorte l'objet sera happé entre les courroies lorsque celles-ci sont mises en mouvement.

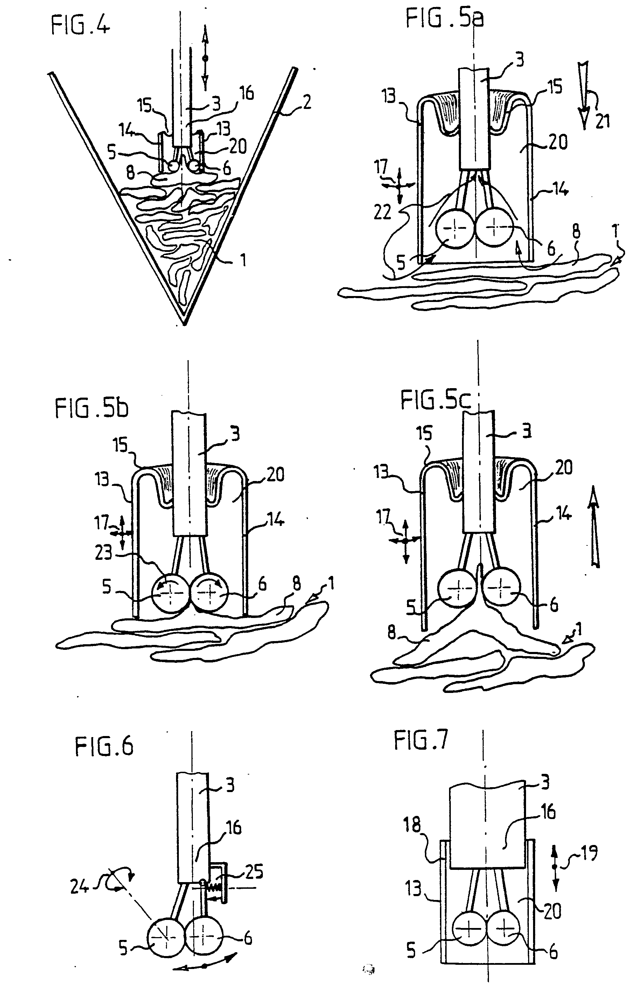

Suivant le type d'articles à prélever le dispositif de préhension de la présente invention peut présenter certaines variantes, notamment dans le cas de préhension d'articles enveloppés dans un emballage souple, tel qu'un sachet de film plastifié, et disposé en vrac dans un bac. La figure 4 représente un autre mode de réalisation préférentiel de la présente invention.

Comme le dispositif représenté à la figure I, qui vient d'être décrit, celui de la figure 4 comporte un bras de manipulation 3 mobile, susceptible de plonger dans le bac 2 pour y prélever un des articles 1 disposés en vrac. Le bras 3 porte également un ensemble de roulettes 5 et 6 présentant une surface de préhension très faible et comportant des moyens d'entraînement contrôlés autorisant la rotation des roulettes afin que celles-ci puissent pincer l'article 8 directement ou son emballage.

Par contre, le dispositif illustré à la figure 4 comporte une cloche rétractable 13 entourant le dit ensemble de roulettes 5 et 6. Le principal but de cette cloche est d'amener les articles en contact avec les roulettes afin de faciliter la préhension des articles 1 disposés en vrac dans le dit bac 2.

Selon le mode de réalisation représenté aux figures 4 et 5, la cloche rétractable 13 est constituée par un manchon 14, notamment de forme cylindrique, dont le diamètre est de l'ordre de 7 à 10 cm.

Le manchon 14 comporte à sa partie supérieure un soufflet 15, notamment réalisé en matière semirigide telle que du caoutchouc, de manière à pouvoir articuler la cloche 13, ainsi réalisée, par rapport à l'axe vertical de descente du bras 3.

De plus, le soufflet 15, placé autour de la partie terminale 16 du bras de manipulation 3, permet à la cloche de se rétracter selon l'axe du bras 3 d'une distance comprise entre 2 et 5 cm comme le montre la flèche repérée 17.

Grâce à l'articulation de la cloche 13, par rapport au bras 3, l'ouverture de sa base peut pivoter et de ce fait se plaquer contre la surface de l'article 8 à prélever, pour faciliter la prise et favoriser l'engagement de l'article 8 entre les roulettes 5 et 6.

Dans une variante de réalisation, comme le montre la figure 7, la cloche rétractable 13 peut être constituée par un manchon rigide 18 coulissant autour de la partie terminale 16 du bras 3. Dans ce cas seul le déplacement vertical de la cloche 13 est autorisé comme le montre la flèche 19.

Afin de favoriser et d'optimaliser la préhension des articles 1 disposés en vrac dans le bac 2, le dispositif de préhension comporte un dispositif d'aspiration permettant de créer une dépression contrôlée dans le volume intérieur 20 de la cloche 13, les dits articles étant alors d'abord guidés puis happés par la dite cloche.

Le dispositif de dépression peut être notamment constitué par un groupe à fort débit d'air apte à créer une faible dépression. Lorsque ce groupe est en fonctionnement et que la cloche 13 se rapproche des articles 1, la dépression crée a tendance à soulever l'article et à le plaquer sur l'ouverture de la cloche 13.

Le dispositif de préhension réalisé selon ce mode de réalisation comporte en outre des moyens de détection contrôlant la pression régnant à l'intérieur 20 de la cloche 13. Ces moyens sont notamment constitués par un capteur de pression du type vacuostat.

Lorsque l'ouverture de la cloche 13 est en contact avec l'article 8 à prélever, le groupe de dépression crée alors un vide plus poussé dans l'intérieur 20 de la cloche, ce vide peut être détecté par le capteur de pression et l'information ainsi enregistrée permet notamment d'arrêter la descente du bras de manipulation 3 et la mise en rotation des roulettes 5 et 6.

Les figures 5a, 5b et 5c illustrent les différentes phases de la préhension unitaire.

Le bras 3, initialement disposé au-dessus du bac 2 dans lequel se trouvent disposés les articles en vrac 1, est animé d'un mouvement de descente schématisé par la flèche 21 de la figure 5a. Pendant cette opération de descente, le groupe d'aspiration crée une circulation d'air de l'extérieur vers l'intérieur de la cloche 13 schématisée par les flèches 22 de la figure 5a.

Lorsque l'ouverture de la cloche 13 vient se poser sur l'article à prélever 8 tel que représenté à la figure 5b, le capteur de pression détecte la dépression à l'intérieur 20 de la cloche ce qui permet d'une part d'arrêter le mouvement de descente du bras 3 et d'autre part de mettre en rotation les roulettes 5 et 6 selon le sens indiqué par les flèches 23 de la figure 5b, l'aspiration d'air étant maintenue.

De par la déformabilité de l'article 8, celui-ci sera happé entre les roulettes 5 et 6. Il est à remarquer que pour faciliter cette préhension, les surfaces des roulettes 5 et 6 auront un fort coefficient de frottement et pourront s'écarter l'une de l'autre pour permettre l'introduction de l'article 8 entre elles.

A la figure 6 est représenté un mode préférentiel de réalisation de l'ensemble des roulettes 5 et 6 disposées en extrémité du bras 3. Dans ce cas seule la roulette 5, de préférence cylindrique et de faibles dimensions, est entraînée par un organe moteur 24 apte à tourner dans les deux sens de rotation, l'autre roulette 6, de dimension similaire à la précédente, est libre en rotation. Les deux roulettes 5 et 6 dont leurs génératrices sont appliquées l'une contre l'autre, exercent une pression sur l'article prélevé par l'intermédiaire des moyens de pression 25 élastiques, réglables. Les moyens de pression 25 s'exercent sur la roulette 6 qui est de ce fait pressée contre la roulette 5.

Aussitôt que l'article 8 aura été happé entre les roulettes comme le montre la figure 5c, on pourra arrêter la rotation des roulettes 5 et 6 ainsi que l'aspiration d'air, et le bras de manipulation 3 pourra alors être relevé, l'article 8 prélevé restant prisonnier des deux roulettes 5 et 6. Cet ensemble d'opérations sera déclenché par des moyens de détection contrôlant la présence d'un article 8 entre les roulettes 5 et 6, ces moyens de détection étant similaires à ceux décrits dans le premier mode de réalisation tels que détecteurs optiques, détecteurs de déplacement, détecteurs de conductivité.

Selon ce mode de réalisation, tel qu'illustré aux figures 4, 5 et 6, pour augmenter le fiabilité et la certitude de préhension unitaire, pendant la remontée du bras 3 on met en service le groupe d'aspiration mais en sens inverse de sorte qu'il souffle vers l'article prélevé. Ainsi, dans le cas où deux articles auraient été prélevés, le deuxième article, pris du côté de la roulette libre 6, tombera du fait de la pesanteur et du soufflage.

Par ailleurs, en utilisant comme moyens de détection d'articles un système à détecteur de conductivité, si, lors de la remontée du bras 3, l'article prélevé 8 a tendance à glisser, on pourra remettre en rotation les roulettes 5 et 6 de manière à récupérer l'article. Cette mise en rotation pourra être effectuée en comparant la conductivité du système à un seuil préétabli.

On notera par exemple que les dimensions de la cloche ont été prévus assez grandes pour que cette dernière joue le rôle de rabatteur d'articles vers les roulettes. Par contre, les dimensions des roulettes restent relativement petites car il y a lieu de ne prendre qu'un seul article à la fois ceci justifie donc l'usage combiné de la cloche et des roulettes qui ont des objectifs complémentaires.

D'une façon générale, la dépose de l'objet appréhendé sera réalisée en inversant le sens de rotation des roulettes pour dégager le dit objet.

**Revendications**

1. Dispositif de préhension unitaire d'articles disposés en vrac dans un bac (2), les dits articles (1) étant, par leur nature, mous tels que des textiles, ou enveloppés dans un emballage souple, tel qu'un sachet en film plastifié, comportant:
— un bras de manipulation (3) mobile dont les déplacements verticaux sont contrôlés,
— un ensemble de roulettes (5) et (6) de préhension porté par le dit bras, comportant des moyens d'entraînement contrôlés autorisant la rotation des roulettes afin que celles-ci puissent pincer l'article (8) directement ou son emballage, caractérisé par le fait qu'il comporte:
— une cloche rétractable (13) entourant l'ensemble de roulettes pour faciliter la préhension des articles (1) dans le dit bac (2),
— un dispositif d'aspiration permettant de créer une dépression contrôlée dans le volume intérieur (20) de la dite cloche (13), les dits articles étant guidés puis happés par la cloche (13).

2. Dispositif de préhension unitaire d'articles selon la revendication 1, caractérisé par le fait que le bras de manipulation (3) est susceptible de plonger dans le bac (2) pour y prélever un des articles disposés en vrac, et que l'ensemble de roulettes (5) et (6) présente une surface de préhension très faible.

3. Dispositif de préhension unitaire selon la revendication 1, caractérisé par le fait qu'il comporte des moyens de détection contrôlant la présence d'un article (8) entre les roulettes (5) et (6) autorisant notamment l'arrêt de la rotation des dites roulettes.

4. Dispositif de préhension unitaire selon la revendication 1, caractérisé par le fait qu'il comporte des moyens de détection contrôlant la pression régnant à l'intérieur (2a) de la cloche (13) autorisant notamment l'arrêt de la descente du bras de manipulation (3).

5. Dispositif de préhension unitaire selon la revendication 1, caractérisé par le fait que l'ensemble des roulettes (5) et (6) de préhension est constitué par deux roulettes cylindriques ou coniques dont leurs génératrices sont appliquées l'une contre l'autre, entraînées par un organe moteur, aptes à s'écarter l'une de l'autre pour permettre l'introduction de l'article (8) entre elles.

6. Dispositif de préhension unitaire selon la revendication 1, caractérisé par le fait que l'ensemble des roulettes (5) et (6) de préhension est constitué par deux roulettes cylindriques dont leurs génératrices sont appliquées l'une contre l'autre, une première roulette (5), motrice, étant entraînée par l'organe moteur (24), la deuxième roulette (6), libre en rotation, étant pressée contre la dite première roulette (5) par des moyens de pression élastiques (25).

7. Dispositif de préhension unitaire selon la revendication 6, caractérisé par le fait que les roulettes cylindriques présentent un petit diamètre, compris entre 5 et 15 mm, une faible largeur, de l'ordre de 5 mm, l'axe des roulettes étant disposé horizontalement ou obliquement.

8. Dispositif de préhension unitaire selon la revendication 1, caractérisé par le fait que la cloche rétractable (13) est constituée par un manchon rigide (18) coulissant sur la partie terminale (16) du bras de manipulation (3).

9. Dispositif de préhension unitaire selon la revendication 1, caractérisé par le fait que la cloche rétractable (13) est constituée par un manchon articulé (14), fixé sur la partie terminale (16) du bras de manipulation (3).

10. Dispositif de préhension unitaire d'articles selon la revendication 3, caractérisé par le fait que les moyens de détection contrôlant la présence d'un article (8) entre les roulettes (5) et (6), sont constitués soit par un capteur optique, soit par un capteur décelant un écartement des dites roulettes, ou soit par un capteur contrôlant la conductivité entre les dites roulettes, les dites roulettes étant alors rendues conductrices de l'électricité.

11. Dispositif de préhension unitaire d'articles selon la revendication 4, caractérisé par le fait que les moyens de détection, contrôlant la pression régnant dans le volume intérieur (20) de la cloche (13), sont constitués par un capteur de pression du type vacuostat.

12. Dispositif de préhension unitaire selon la revendication 1, caractérisé par le fait qu'il comporte des moyens pour repousser les articles (9) vers le fond du bac (2), notamment constitués par un poussoir (10) balayant les parois intérieures du bac (2), le dit bac (2) présentant une forme évasée, les dits articles (9) étant ramenés vers le fond du bac (2).

13. Dispositif de préhension unitaire selon la revendication 1, caractérisé par le fait qu'un dispositif de soufflage est associé au dispositif d'aspiration pour augmenter la certitude de préhension unitaire.

14. Dispositif de préhension unitaire selon la revendication 1, caractérisé par le fait qu'il comporte des moyens de détection pour arrêter la descente du bras (3) lorsque le bras (3) vient appuyer sur les articles (1) notamment constitués par un capteur d'effort.

15. Dispositif de préhension unitaire selon la revendication 1, caractérisé par le fait que la cloche rétractable se présente sous la forme d'un cylindre dont le diamètre est compris entre 7 et 10 cm.

**Patentansprüche**

1. Vorrichtung zum einzelnen Greifen von Artikeln, die in einem Behälter (2) lose angeordnet sind, wobei die besagten Artikel (1) ihrer Natur nach weich sind, wie beispielsweise Textilien, oder in eine nachgiebige Verpackung, wie beispielsweise einen Beutel aus plastifizierter Folie verpackt sind, aus:
— einem beweglichen Manipulationsarm (3), dessen vertikale Bewegungen gesteuert werden,
— einer von dem besagten Arm getragenen Einheit aus Greifrollen (5) und (6), die gesteuerte Antriebsmittel aufweist, die die Rotation der Rollen bewirken, damit diese unmittelbar den Artikel (8), oder seine Verpackung zwischen sich festklemmen können, dadurch gekennzeichnet, daß sie ausgerüstet ist mit:
— einer zurückziehbaren Glocke (13), die die Rolleneinheit umgibt, und die dazu bestimmt ist, das Greifen der Artikel (1) in dem besagten Behälter (2) zu erleichtern,
— einer Ansaugvorrichtung, mit der ein gesteuerter Unterdruck in dem inneren Volumen (20) der besagten Glocke (13) erzeugt werden kann, wobei die besagten Artikel 1 von der Glocke (13) geführt und dann eingesaugt werden.

2. Vorrichtung zum einzelnen Greifen von Artikeln gemäß Anspruch 1, dadurch gekennzeichnet, daß der Manipulationsarm (3) in den Behälter (2) abgesenkt werden kann, um daraus einen der lose angeordneten Artikel herauszuholen, und daß die Einheit aus Rollen (5) und (6) eine sehr kleine Greiffläche aufweist.

3. Vorrichtung zum einzelnen Greifen von Artikeln gemäß Anspruch 1, dadurch gekennzeichnet, daß sie Sensormittel aufweist, die kontrollieren, ob sich ein Artikel (8) zwischen den Rollen (5) und (6) befindet, und die insbesondere die Beendigung der Rotation der besagten Rollen bewirken.

4. Vorrichtung zum einzelnen Greifen von Artikeln gemäß Anspruch 1, dadurch gekennzeichnet, daß sie Sensormittel aufweist, die den Druck im Inneren (20) der Glocke (13) steuern, und die insbesondere die Beendigung der Absenkung des Manipulationsarms (3) bewirken.

5. Vorrichtung zum einzelnen Greifen von Artikeln gemäß Anspruch 1, dadurch gekennzeichnet, daß die Einheit aus den Greifrollen (5) und (6) aus zwei zylindrischen oder konischen Rollen besteht, deren Mantellinien sich berühren, und die von einem Antriebsorgan angetrieben werden und sich voneinander entfernen können, damit der Artikel (8) zwischen sie eingezogen werden kann.

6. Vorrichtung zum einzelnen Greifen von Artikeln gemäß Anspruch 1, dadurch gekennzeichnet, daß die Einheit aus den Greifrollen (5) und (6) aus zwei zylindrischen Rollen besteht, deren Mantellinien sich berühren, wobei eine erste antreibende Rolle (5) von dem Antriebsorgan (24) angetrieben wird, und eine zweite, frei drehbare Rolle (6) durch elastische Druckmittel (25) gegen die besagte erste Rolle (5) gedrückt wird.

7. Vorrichtung zum einzelnen Greifen von Artikeln gemäß Anspruch 6, dadurch gekennzeichnet, daß die zylindrischen Rollen einen kleinen Durchmesser haben, der zwischen 5 und 15 mm liegt, und eine geringe Breite haben, die ungefähr 5 mm beträgt, wobei die Achse der Rollen horizontal oder schräg angeordnet ist.

8. Vorrichtung zum einzelnen Greifen von Artikeln gemäß Anspruch 1, dadurch gekennzeichnet, daß die zurückziehbare Glocke (13) aus einer starren Muffe (18) besteht, die auf dem Endteil (16) des Manipulationsarms (3) gleitet.

9. Vorrichtung zum einzelnen Greifen von Artikeln gemäß Anspruch 1, dadurch gekennzeichnet, daß die zurückziehbare Glocke (13) aus einer schwenkbaren Muffe (14) besteht, die auf dem Endteil (16) des Manipulationsarms (3) befestigt ist.

10. Vorrichtung zum einzelnen Greifen von Artikeln gemäß Anspruch 3, dadurch gekennzeichnet, daß die Sensormittel, die kontrollieren, ob sich ein Artikel (8) zwischen den Rollen (5) und (6) befindet, bestehen aus entweder einem optischen Fühler, oder einem Fühler, der einen Abstand zwischen den besagten Rollen erkennt, oder einem Fühler, der die Leitfähigkeit zwischen den besagten Rollen mißt, die dann elektrisch leitend gemacht werden.

11. Vorrichtung zum einzelnen Greifen von Artikeln gemäß Anspruch 4, dadurch gekennzeichnet, daß die Sensormittel, die den Druck in dem inneren Volumen (20) der Glocke (13) steuern, aus einem Druckfühler vom Typ Vakuostat bestehen.

12. Vorrichtung zum einzelnen Greifen von Artikeln gemäß Anspruch 1, dadurch gekennzeichnet, daß sie Mittel aufweist, um die Artikel (9) nach dem Boden des Behälters (2) zurückbringen, wobei diese Mittel insbesondere aus einem Schieber (10) bestehen, der über die inneren Wände des Behälters (2) streicht, und die besagten Artikel (9) infolge der sich nach oben erweiternden Form des Behälters (2) nach dem Boden des Behälters (2) zurückfallen.

13. Vorrichtung zum einzelnen Greifen von Artilkeln gemäß Anspruch 1, dadurch gekennzeichnet, daß die Ansaugvorrichtung mit einer Blasvorrichtung kombiniert ist, um die Gewißheit des einzelnen Greifens zu erhöhen.

14. Vorrichtung zum einzelnen Greifen von Artikeln gemäß Anspruch 1, dadurch gekennzeichnet, daß sie Sensormittel aufweist, um die Absenkung des Arms (3) zu beenden, wenn dieser die Artikel (1) berührt, wobei diese Sensormittel insbesondere aus einem Kraftfühler bestehen.

15. Vorrichtung zum einzelnen Greifen von Artikeln gemäß Anspruch 1, dadurch gekennzeichnet, daß die zurückziehbare Glocke die Form eines Zylinders hat, dessen Durchmesser zwischen 7 und 10 cm liegt.

**Claims**

1. A device for gripping one by one articles arranged in bulk in a bin (2), the said articles (1) being of a soft nature such as textiles or enveloped in a flexible packing such as a bag of plasticised film, the device including:
— a movable manipulator arm (3) the vertical movements of which are controlled;
— a set of gripper rollers (5) and (6) carried by the said arm and including driving means controlled to allow rotation of the rollers in order that they can pinch the article (8) directly or its packing;
.. characterized by the fact that it includes:
— a retractable bell (13) surrounding the set of rollers in order to facilitate gripping of the articles (1) in the said bin (2);
— a suction device enabling a controlled reduced pressure to be created in the volume (20) inside the said bell (13), the said articles being guided when caught by the bell (13).

2. A device for gripping articles one by one as in Claim 1, characterized by the fact that the manipulator arm (3) is capable of dipping into the bin (2) in order to remove from it one of the articles arranged in bulk, and that the set of rollers (5) and (6) exhibits a very weak gripping surface.

3. A device for gripping (articles) one by one as in Claim 1, characterized by the fact that it includes detector means which check the presence of an article (8) between the rollers (5) and (6) and in particular allow stopping of the rotation of the said rollers.

4. A device for gripping (articles) one by one as in Claim 1 characterized by the fact that it includes detector means which check the pressure prevailing in the interior (20) of the bell (13) and in particular allow stopping of the lowering of the manipulator arm (3).

5. A device for gripping (articles) one by one as in Claim 1, characterized by the fact that the set of gripper rollers (5) and (6) consists of two cylindrical or conical rollers of which the generatrices are applied against one another and 'which are driven by a driving member and are suitable for being separated from one another in order to enable introduction of the article (8) between them.

6. A device for gripping (articles) one by one as in Claim 1, characterized by the fact that the set of gripper rollers (5) and (6) consists of two cylindrical rollers the generatrices of which are applied against one another, a first roller (5), the driving roller, being driven by the driving member (24) and the second roller (6) being free to rotate and being pressed against the said first roller (5) by resilient pressure means (25).

7. A device for gripping (articles) one by one as in Claim 6, characterized by the fact that the cylindrical rollers exhibit a small diameter lying between 5 and 15 mm and a narrow width of the order of 5 mm, the axes of the rollers being arranged horizontally or obliquely.

8. A device for gripping (articles) one by one as in Claim 1, characterized by the fact that the retractable bell (13) consists of a rigid collar (18) which slides along the end portion (16) of the manipulator arm (3).

9. A device for gripping (articles) one by one as in Claim 1, characterized by the fact that the retractable bell (13) consists of a hinged collar (14) fastened onto the end portion (16) of the manipulator arm (3).

10. A device for gripping articles one by one as in Claim 3, characterized by the fact that the detector means which check the presence of an article (8) between the rollers (5) and (6) consist either of a pick-up which is optical cr which reveals separation of the said rollers or else of a pick-up which checks the conductivity between the said rollers, the said rollers being then rendered conductive of electricity.

11. A device for gripping articles one by one as in Claim 4, characterized by the fact that the detector means which check the pressure prevailing in the volume (20) inside the bell (13) consist of a pressure pick-up of vacuostat type.

12. A device for gripping (articles) one by one as in Claim 1, characterized by the fact that it includes means of pushing the articles (9) back towards the bottom of the bin (2), which consist in particular of a pusher (10) which sweeps the inner walls of the bin (2), the said bin (2) exhibiting a splayed shape and the said articles (9) being brought back towards the bottom of the bin (2).

13. A device for gripping (articles) one by one as in Claim 1, characterized by the fact that a blower device is associated with the suction device in order to increase the certainty of gripping one by one.

14. A device for gripping (articles) one by one as in Claim 1, characterized by the fact that it includes detector means for stopping the lowering of the arm (3) when the arm (3) comes to bear against the articles (1), the means consisting in particular of a force pick-up.

15. A device for gripping (articles) one by one as in Claim 1, characterized by the fact that the retractable bell appears in the form of a cylinder the diameter of which lies between 7 and 10 cm.

EP  0 145 630  B1

FIG 1

FIG 2a

FIG 2b

FIG 2c

FIG 3

1

FIG.4

FIG.5a

FIG.5b

FIG.5c

FIG.6

FIG.7

2